(19) Europäisches Patentamt / European Patent Office / Office européen des brevets

(11) **EP 4 148 825 A1**

(12) **EUROPEAN PATENT APPLICATION**
published in accordance with Art. 153(4) EPC

(43) Date of publication:
**15.03.2023 Bulletin 2023/11**

(51) International Patent Classification (IPC):
$H01M\ 4/36$ [(2006.01)]   $H01M\ 4/62$ [(2006.01)]
$H01M\ 4/525$ [(2010.01)]   $H01M\ 4/505$ [(2010.01)]
$H01M\ 10/052$ [(2010.01)]

(21) Application number: **21821490.6**

(52) Cooperative Patent Classification (CPC):
**H01M 4/36; H01M 4/505; H01M 4/525; H01M 4/62;
H01M 10/052; Y02E 60/10**

(22) Date of filing: **11.06.2021**

(86) International application number:
**PCT/KR2021/007333**

(87) International publication number:
**WO 2021/251793 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.06.2020 KR 20200071473**

(71) Applicant: **ECOPRO BM CO., LTD.**
**Cheongju-si, Chungcheongbuk-do 28116 (KR)**

(72) Inventors:
• **KONG, Bo Hyun**
  **Cheongju-si, Chungcheongbuk-do 28116 (KR)**
• **CHOI, Moon Ho**
  **Cheongju-si, Chungcheongbuk-do 28116 (KR)**

• **YU, Hyun Jong**
  **Cheongju-si, Chungcheongbuk-do 28116 (KR)**
• **KIM, Kyung Gu**
  **Cheongju-si, Chungcheongbuk-do 28116 (KR)**
• **KIM, Su Jin**
  **Cheongju-si, Chungcheongbuk-do 28116 (KR)**
• **JO, Min Su**
  **Cheongju-si, Chungcheongbuk-do 28116 (KR)**
• **KIM, Yeon Hee**
  **Cheongju-si, Chungcheongbuk-do 28116 (KR)**
• **SHIN, Jong Seung**
  **Cheongju-si, Chungcheongbuk-do 28116 (KR)**
• **YUN, Jin Kyeong**
  **Cheongju-si, Chungcheongbuk-do 28116 (KR)**
• **KWAK, Hwan Wook**
  **Cheongju-si, Chungcheongbuk-do 28116 (KR)**

(74) Representative: **BCKIP Part mbB**
**Siegfriedstraße 8**
**80803 München (DE)**

(54) **CATHODE ACTIVE MATERIAL AND LITHIUM SECONDARY BATTERY COMPRISING SAME**

(57) The present invention relates to a positive electrode active material for a lithium secondary battery which can simultaneously improve electrochemical properties and stability, which are in a mutual trade-off relationship, by introducing a step structure to a surface part of a lithium composite oxide constituting the positive electrode active material, and a lithium secondary battery including the same.

FIG. 1

EP 4 148 825 A1

**Description**

BACKGROUND

**1. Field of the Invention**

The present invention relates to a positive electrode active material for a lithium secondary battery which can simultaneously improve electrochemical properties and stability, which are in a mutual trade-off relationship, by introducing a step structure to a surface part of a lithium composite oxide constituting the positive electrode active material, and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed.

Among the positive electrode active materials, $LiCoO_2$ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such cation mixing, a large amount of Li by-products is generated. Since most of the Li by-products consist of compounds of LiOH and $Li_2CO_3$, they may cause of gelation in preparation of a positive electrode paste or cause gas generation according to repeated charge/discharge after the manufacture of an electrode. Among the Li by-products, residual $Li_2CO_3$ increases the cell swelling phenomenon and thus acts a cause of reducing lifetime characteristics.

To compensate for these shortcomings, as a positive electrode active material for a secondary battery, the demand for a high-Ni positive electrode active material having an Ni content of 50% or more has started to increase. However, such a high-Ni positive electrode active material exhibits high capacity, and as the Ni content in the positive electrode active material increases, there is a problem of causing structural instability due to Li/Ni cation mixing. The structural instability of the positive electrode active material may lead to rapid deterioration of a lithium secondary battery not only at high temperatures but also at room temperature.

Accordingly, it is necessary to develop a positive electrode active material to compensate for the problems of such high-Ni positive electrodes.

SUMMARY OF THE INVENTION

In a positive electrode active material for a lithium secondary battery, a predetermined trade-off relationship may be established between some indicators representing the electrochemical properties of the positive electrode active material and some indicators representing stability. Accordingly, when the capacity characteristics of the positive electrode active material are excessively improved, conversely, as the stability of particles constituting the positive electrode active material is lowered, there is a risk that stable charging/discharging performance may not be exhibited.

Therefore, the present invention is directed to providing a positive electrode active material capable of addressing low structural stability while maintaining the high electrochemical properties of a conventional positive electrode active material for a lithium secondary battery, particularly, a high-Ni positive electrode active material.

Particularly, the present invention is directed to providing a positive electrode active material for a lithium secondary battery capable of simultaneously improving electrochemical properties and stability, which are in a mutual trade-off relationship, by introducing a step structure to a surface part of a lithium composite oxide constituting a positive electrode active material.

The present invention is also directed to providing a lithium secondary battery employing a positive electrode including the positive electrode active material defined above.

Conventionally, a technique for reducing the surface side reaction of a positive electrode active material and thus improving stability as an element such as a light element (typically, an element such as boron) in the positive electrode active material is allowed to be present in the form of an oxide has been suggested.

However, the light element may reduce surface side reactions of the positive electrode active material, but conversely, it may increase the content of lithium-containing impurities on the surface depending on the type of presence to act as a cause of degrading electrochemical properties of the positive electrode active material.

Hence, the inventors have confirmed that when a step structure is introduced to a surface part of a lithium composite oxide that enables intercalation and deintercalation of lithium, the electrochemical properties and stability, which are in a mutual trade-off relationship, may be improved at the same time.

Accordingly, according to one aspect of the present invention, a positive electrode active material includes a lithium composite oxide capable of intercalation and deintercalation of lithium, and the lithium composite oxide has a surface part with a step structure.

Here, the step structure formed on the surface part of the lithium composite oxide may be a terrace-step-kink structure.

In one embodiment, the lithium composite oxide includes at least nickel and cobalt, and may further at least include one selected from manganese and aluminum.

In addition, the lithium composite oxide may be represented by Formula 1 below.

$$[Formula\ 1] \qquad Li_wNi_{1-(x+y+z)}Co_xM1_yM2_zO_2$$

(Here,

M1 is at least one selected from Mn and Al,
M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd, B and Cu,
M1 and M2 are different elements,
$0.5 \le w \le 1.5$, $0 \le x \le 0.50$, $0 < y \le 0.20$, and $0 \le z \le 0.20$).

In addition, the positive electrode active material includes a secondary particle formed by aggregating a plurality of lithium composite oxides, which are primary particles, and a coating layer including an oxide represented by Formula 2 may be formed on at least a part of the surfaces of the primary particles and the secondary particles.

$$[Formula\ 2] \qquad Li_aM3_bO_c$$

(Here,

M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd and Nd,
$0 \le a \le 8$, $0 < b \le 8$, and $2 \le c \le 13$).

Even when the coating layer including the oxide represented by Formula 2 is formed on at least a part of the surfaces of the primary particles and the secondary particles, the coating layer may have a surface part with a step structure like the lithium composite oxide. In addition, the step structure formed on the surface part of the coating layer may be a terrace-step-kink structure.

In addition, another aspect of the present invention provides a positive electrode including the above-described positive electrode active material.

Moreover, still another aspect of the present invention provides a lithium secondary battery including the above-described positive electrode.

A lithium composite oxide constituting a positive electrode active material according to the present invention has a surface part with a step structure unlike conventional lithium composite oxides which have mostly spherical surfaces, and the step structure can structurally stabilize the lithium composite oxide and also inhibit side reactions with an electrolyte solution.

Particularly, by forming a coating layer on the surface part of the above-described lithium composite oxide, it is possible to inhibit a decrease in charge amount due to lithium deintercalation and reduce the possibility of side reactions with an electrolyte solution.

BRIEF DESCRIPTION OF THE DRAWINGS

FIG. 1 schematically illustrates the process of introducing a step structure to a surface part of a lithium composite oxide included in a positive electrode active material according to one embodiment of the present invention.
FIGS. 2 and 3 are SEM images of the surface parts of lithium composite oxides included in positive electrode active materials according to Example 1 and Comparative Example 1, respectively.
FIGS. 4 and 5 are SEM images of the surface parts of lithium composite oxides included in positive electrode active materials according to Example 3 and Comparative Example 2, respectively.
FIGS. 6 to 8 are SEM images of the surface parts of lithium composite oxides included in positive electrode active materials according to Example 4 and Comparative Examples 3 and 4, respectively.
FIGS. 9 to 11 are SEM images of the surface parts of lithium composite oxides included in positive electrode active materials according to Example 5 and Comparative Examples 5 and 6, respectively.
FIG. 12 is a TEM image of the surface part of a lithium composite oxide included in the positive electrode active material according to Example 1, showing each crystal plane forming the surface part of the lithium composite oxide.
FIG. 13 is a graph showing the XPS depth profile of the lithium composite oxide included in the positive electrode active material according to Example 1, and FIG. 14 is a graph showing a B1s XPS spectrum for the region in which boron (B) is detected in the XPS depth profile of FIG. 13.
FIG. 15 shows interplanar distances of crystal planes in regions A and B in the TEM image of the lithium composite oxide included in the positive electrode active material according to Example 1.

DETAILED DESCRIPTION OF EXEMPLARY EMBODIMENTS

Hereinafter, positive electrode active materials according to various embodiments of the present invention and lithium secondary batteries including the same will be described in further detail.

Positive electrode active material

A positive electrode active material according to an embodiment of the present invention is capable of lithium intercalation and deintercalation, and includes a lithium composite oxide having a surface part with a step structure.
The lithium composite oxide is an oxide with a layered structure, which includes at least one transition metal as well as lithium, and the lithium composite oxide may at least include nickel and cobalt. In addition, the lithium composite oxide may further include at least one selected from manganese and aluminum in addition to nickel and cobalt.
The lithium composite oxide may be represented by Formula 1 below.

[Formula 1] $Li_wNi_{1-(x+y+z)}Co_xM1_yM2_zO_2$

(Here,

M1 is at least one selected from Mn and Al,
M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd, B and Cu,
M1 and M2 are different elements,
$0.5 \leq w \leq 1.5$, $0 \leq x \leq 0.50$, $0 < y \leq 0.20$, and $0 \leq z \leq 0.20$).

As shown in Formula 1, the lithium composite oxide may further include a dopant in addition to nickel, cobalt, manganese and/or aluminum. In Formula 1, the dopant is represented by M2, and M2 is an element different from M1. That is, when M1 is Mn, M2 is at least one dopant other than Mn, when M1 is Al, M2 is at least one dopant other than Al, and when M1 is Mn and Al, M2 may be at least one dopant other than Mn and Al.
In addition, the lithium composite oxide represented by Formula 1 may be a high-Ni lithium composite oxide having an Ni content of 50% or more, preferably 60% or more, and more preferably 80% or more. The Ni content in the lithium composite oxide may be calculated by Equation 1 below, and expressed as "1-(x+y+z)" in Formula 1. For example, when the lithium composite oxide is a lithium composite oxide represented by NCM811, the "1-(x+y+z)" in Formula 1 is 0.80.

[Equation 1]

$$\text{Ni content} = [\text{Ni (mol\%)} / \text{Ni (mol\%)} + \text{Co (mol\%)} + \text{M1 (mol\%)} + \text{M2 (mol\%)}]*100$$

The positive electrode active material may include a secondary particle in which a plurality of lithium composite oxides, which are primary particles, are aggregated.

Here, the primary particle refers to one grain (or crystallite), and the secondary particle refers to an aggregate formed by aggregating a plurality of primary particles. The primary particle may be formed in a rod, oval, and/or indeterminate shape(s). There may be a void and/or a grain boundary between the primary particles constituting the secondary particle.

For example, the primary particle may be spaced apart from a neighboring primary particle in the secondary particle to form an internal void. In addition, the primary particle may be in contact with an internal void to form a surface present in the secondary particle without forming a grain boundary by being in contact with a neighboring primary particle. Meanwhile, a surface where the primary particle present at the outermost surface of the secondary particle is exposed to external air forms the surface of the secondary particle.

Here, as the primary particle has an average major axis length in the range of 0.1 to 5 $\mu$m, and preferably 0.1 to 2 $\mu$m, the optimal density of a positive electrode manufactured using each of positive electrode active materials according to various embodiments of the present invention may be realized. In addition, the average particle diameter of the secondary particle may vary according to the number of the aggregated primary particles, and may be 1 to 30 $\mu$m.

Meanwhile, the surface part of the lithium composite oxide included in the positive electrode active material according to one embodiment of the present invention has a step structure. Here, the step structure may be present on the surface part(s) of the primary particle and/or the secondary particle, and more particularly, the surface part of the secondary particle.

The step structure formed on the surface part of the lithium composite oxide does not simply refer to a void on the surface part of the lithium composite oxide or a curvature of the surface part formed by aggregating a plurality of lithium composite oxides, but should be understood as a step structure formed entirely on the surface part(s) of the primary particle and/or the secondary particle.

The step structure may be defined as a terrace-step structure. Here, the terrace-step structure may further include a kink structure.

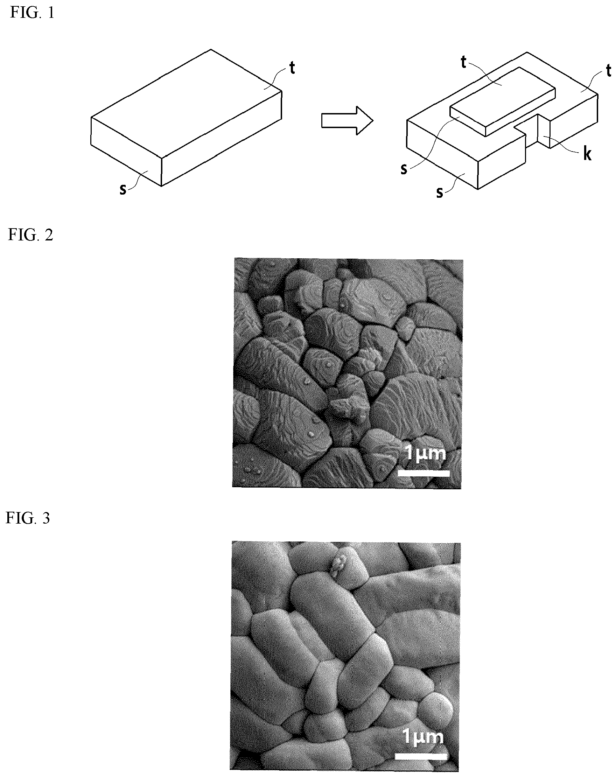

FIG. 1 schematically illustrates the process of introducing a step structure to a surface part of a lithium composite oxide included in a positive electrode active material according to one embodiment of the present invention.

The step structure is a structure formed by stacking a plurality of horizontal or near-horizontal planes on the surface part(s) of the primary particle and/or the secondary particle, and as the area of the plane decreases from a region relatively close to the surface part(s) of the primary particle and/or the secondary particle to a region farther away therefrom, the structure in which a plurality of planes is stacked may have a step structure.

Referring to FIG. 1, a terrace (t) and a step (s) constituting the step structure may be repeatedly formed periodically, and as the surface area of the terrace (t) farther away from the surface part(s) of the primary particle and/or the secondary particle compared to that of the terrace (t) closer to the surface part is smaller, the step structure is provided on the surface part(s) of the primary particle and/or the secondary particle.

That is, as the terrace (t) and the step (s) are repeatedly formed periodically, a so-called step-like structure may be present on the surface part(s) of the primary particle and/or the secondary particle. The direction in which the terrace (t) and the step (s) are periodically repeated from the surface part(s) of the primary particle and/or the secondary particle may follow a major/minor axis direction of the lithium composite oxide, or may exhibit non-directionality.

In addition, as shown in FIG. 1, the step structure may further include a kink (k). The kink (k) refers to a region in which the terrace (t) and/or the step (s) in the terrace-step structure is/are recessed or protruded, and the location and direction in which the kink (k) is formed in the terrace (t) and/or the step (s) may also exhibit non-directionality.

The above-described step structure may contribute to simultaneously improving the electrochemical properties and stability, which are in a mutual trade-off relationship, improving stability while at least minimizing the degradation in electrochemical properties, or improving the electrochemical properties while minimizing the degradation in stability.

Hereinafter, the directionality of the step structure formed on the surface of the lithium composite oxide will be described along with the crystallographic structure of the lithium composite oxide.

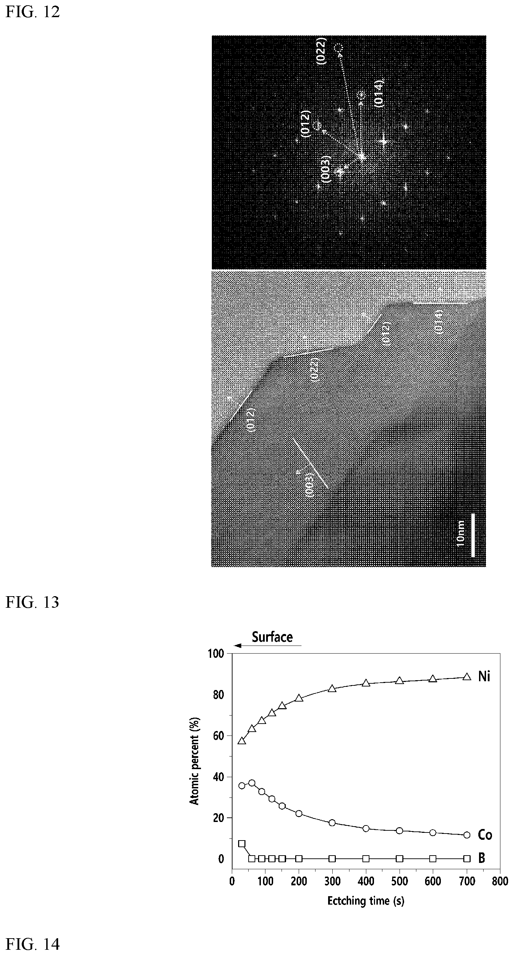

Referring to FIG. 12 showing the TEM image of the surface part of the lithium composite oxide included in a positive electrode active material according to one embodiment of the present invention, the step structure formed on the surface part(s) of the primary particle and/or the secondary particle may be formed to intersect the extension direction of a (003) crystal plane of the lithium composite oxide.

The (003) crystal plane is a specific crystal plane resulting from the lithium composite oxide and is formed along one direction in the lithium composite oxide, the step structure present on the surface part of the lithium composite oxide may be formed to intersect the extension direction of the (003) crystal plane.

Here, the step structure is provided to intersect the extension direction of the (003) crystal plane means that at least the step structure is present so as to intersect in a direction perpendicular or close to perpendicular to the extension direction of the (003) crystal plane.

As such, as the step structure is formed to intersect the extension direction of the (003) crystal plane of the lithium composite oxide, it may contribute to improving the diffusion ability of lithium ions through the lithium composite oxide.

In addition, the step structure formed on the surface part of the lithium composite oxide may be formed along the extension direction of a crystal plane belonging to at least one plane group selected from the {01x}, {02y} and {03z} plane groups among the crystal planes present on the surface part of the lithium composite oxide or formed along a plane parallel to or close to parallel to the extension direction (Here, x, y and z are each independently an integer of 0 to 12).

Here, the formation of the step structure along the extension direction of a specific crystal plane means that the terrace-step of the step structure is formed along the extension direction of a specific crystal plane formed on the surface part of the lithium composite oxide, or that a dihedral angle formed with respect to the extension direction of a specific crystal plane is formed to be 90° or more.

That is, the step structure may be formed to have a predetermined dihedral angle with any crystal plane, which belongs to at least one plane group selected from the {01x}, {02y} and {03z} plane groups among the crystal planes present on the surface part of the lithium composite oxide, adjacent to another crystal plane. Here, the dihedral angle of one crystal plane, which belongs to at least one plane group selected from the {01x}, {02y} and {03z} plane groups with respect to another adjacent crystal plane may be 90° or more.

For example, crystal planes belonging to the {01x} plane group include (011), (012) and (014) crystal planes, crystal planes belonging to the {02y} plane group include (021) and (022) crystal planes, and crystal planes belonging to the {03z} plane group include (003) and (030) crystal planes.

For reference, even plane groups and crystal planes, which are not specifically specified herein, may form the step structure defined herein on the surface part of the lithium composite oxide.

Meanwhile, the step structure formed on the surface part of the lithium composite oxide may have periodically repeating shapes. Specifically, a step structure forming a predetermined dihedral angle may be formed so as to be periodically repeated from at least one crystal plane selected from the {01x}, {02y} and {03z} plane groups for the lithium composite oxide (here, x, y and y are each independently an integer of 0 to 12).

Likewise, even for plane groups and crystal planes, which are not specified herein, the step structure may be formed by periodically repeating a stepped structure forming a predetermined dihedral angle from plane groups and crystal planes mainly formed on the surface part of the lithium composite oxide.

When a diffusion path for lithium ions in the lithium composite oxide constituting a positive electrode active material is formed in a direction parallel to the extension direction of the (003) crystal plane and directs to (012), (014) and (022) crystal planes where the diffusion and deintercalation of lithium ions from the inside to the outside are relatively free, an improvement in electrochemical properties of the positive electrode active material including the lithium composite oxide can be expected.

Meanwhile,
the formed step structure may be formed non-directionally regardless of the directionality of the crystal plane measured from the inside and surface part of the lithium composite oxide.

In an additional embodiment, a coating layer including an oxide represented by Formula 2 below may be formed on at least a part of the surface(s) of the primary particle and/or the secondary particle.

[Formula 2]     $Li_aM3_bO_c$

(Here,

M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd and Nd,
$0 \leq a \leq 8$, $0 < b \leq 8$, and $2 \leq c \leq 13$).

The coating layer may be selectively present on at least a part of the surface of the primary particle and/or the secondary particle, and the coating layer may be defined as a region in which the oxide represented by Formula 2 is present on the surface(s) of the primary particle and/or the secondary particle.

The coating layer may continuously or discontinuously coat at least a part of the surface of the primary particle and/or the secondary particle, and when the coating layer is discontinuously present, it may be present in the form of an island. In addition, the coating layer may be present in the form of a solid solution that does not form a boundary with the primary particles and/or the secondary particles, but the present invention is not limited thereto.

Meanwhile, even when the coating layer is present on the surface part of the lithium composite oxide, it is preferable that the step structure present on the surface part of the lithium composite oxide is maintained as it is.

When the coating layer is present on the surface of the lithium composite oxide, it may also have a surface part with a step structure. Here, the step structure follows the step structure present on the surface part of the lithium composite oxide.

Likewise, when the step structure present on the surface part of the lithium composite oxide is a terrace-step-kink structure further including a kink structure, the surface part of the coating layer may also have a terrace-step-kink structure.

In addition, at least one of the oxides included in the coating layer may be a boron-containing oxide such as a borate-based compound or a lithium borate (LBO)-based compound. The boron-containing oxide may be represented by Formula 3 below,

$$[\text{Formula 3}] \qquad Li_dB_eO_f$$

(Here,

$0 \leq d \leq 8$, $0 < e \leq 8$, and $2 \leq f \leq 13$).

Non-limiting examples of the boron-containing oxide include $B_2O_3$, $Li_2O\text{-}B_2O_3$, $LiBO_2$, $Li_3BO_3$, $Li_3BO_5$, $Li_2B_4O_7$, $Li_2B_2O_7$, $Li_2B_8O_{13}$, and $Li_6B_4O_9$.

The boron-containing oxide may provide a surface protection effect for the lithium composite oxide to inhibit surface side reactions, thereby improving the stability of a positive electrode active material. The coating layer may further include an additional oxide other than a boron-containing oxide, so it can reduce lithium-containing impurities present on the surface of the lithium composite oxide and also can serve as a diffusion path for lithium ions, thereby improving the electrochemical properties of the positive electrode active material.

The oxide is an oxide in which lithium and an element represented by M3 are complexed, or an M3 oxide, and the metal oxide may be, for example, $Li_aW_bO_c$, $Li_aZr_bO_c$, $Li_aTi_bO_c$, $Li_aNi_bO_c$, $Li_aCo_bO_c$, $Li_aAl_bO_c$, $Co_bO_c$, $Al_bO_c$, $W_bO_c$, $Zr_bO_c$ or $Ti_bO_c$, but the above examples are merely described for convenience of understanding, and the oxide defined in the present invention is not limited to the above-described examples.

In addition, the oxide may be or further include an oxide in which lithium and at least two elements represented by M3 are complexed. The oxide in which lithium and at least two elements represented by M3 are complexed may be, for example, $Li_a(W/Ti)_bO_c$, $Li_a(W/Zr)_bO_c$, $Li_a(W/Ti/Zr)_bO_c$, or $Li_a(W/Ti/B)_bO_c$, but the present invention is not necessarily limited thereto.

Lithium secondary battery

According to another embodiment of the present invention, a positive electrode including a positive electrode current collector and a positive electrode active material layer formed on the positive electrode current collector may be provided. Here, the positive electrode active material may include lithium composite oxides according to various embodiments of the present invention as a positive electrode active material.

Therefore, detailed description of the lithium composite oxides will be omitted, and other components that have not been described will be explained. In addition, hereinafter, the above-described lithium composite oxide will be referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the manufacture of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifespan characteristics, it is useful in portable devices such as a mobile phone, a notebook computer and a digital camera and an electric automobile field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to yet another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Preparation Example 1. Preparation of positive electrode active material

Example 1

A nickel composite precursor of $Ni_{0.98}Co_{0.01}Mn_{0.01}(OH)_2$ was prepared using an aqueous precursor solution in which nickel sulfate, cobalt sulfate and manganese sulfate were mixed in a molar ratio of 98:1:1.

After mixing the nickel composite precursor and LiOH (Li/metal ratio = 1.06), the temperature was raised to 790 °C at 2 °C per minute while maintaining an $O_2$ atmosphere in a furnace to perform primary sintering for 10 hours, and the resultant was disintegrated, thereby obtaining a lithium composite oxide.

Subsequently, the lithium composite oxide was washed with distilled water containing 3 mol% $Co(OH)_2$, filtered and then dried.

Next, the dried lithium composite oxide, LiOH and $H_3BO_3$ were mixed, and then heated to 720 °C at 4 °C per minute while maintaining an $O_2$ atmosphere in a furnace to perform secondary sintering for 10 hours, and the resultant was cooled naturally, thereby obtaining a positive electrode active material as a final product.

Before secondary sintering, LiOH and $H_3BO_3$ were mixed to be 4 mol% and 0.1 mol% of the total composition, respectively.

Example 2

A positive electrode active material was prepared in the same manner as in Example 1, except that, before secondary sintering, the content of $H_3BO_3$ was mixed to be 0.3 mol% of the total composition.

Comparative Example 1

A positive electrode active material was prepared in the same manner as in Example 1, except that, before secondary sintering, instead of mixing the lithium composite oxide, LiOH and $H_3BO_3$, a lithium composite oxide and LiOH were mixed. Also, before secondary sintering, LiOH was mixed to be 4 mol% of the total composition.

Example 3

A nickel composite precursor of $Ni_{0.96}Co_{0.04}(OH)_2$ was prepared using a precursor aqueous solution in which nickel sulfate and cobalt sulfate were mixed in a molar ratio of 96.0:4.0.

After mixing the nickel composite precursor, LiOH (Li/metal ratio = 1.04) and 1.4 mol% $Al(OH)_3$, the temperature was raised to 720 °C at 2 °C per minute while maintaining an $O_2$ atmosphere in a furnace to perform primary sintering for 10 hours, and the resultant was disintegrated, thereby obtaining a lithium composite oxide.

Subsequently, the lithium composite oxide was washed with distilled water containing 3 mol% $Co(OH)_2$, filtered and then dried.

Next, the dried lithium composite oxide, LiOH and $H_3BO_3$ were mixed, and then heated to 720 °C at 4 °C per minute while maintaining an $O_2$ atmosphere in a furnace to perform secondary sintering for 10 hours, and the resultant was cooled naturally, thereby obtaining a positive electrode active material as a final product.

Before secondary sintering, LiOH and $H_3BO_3$ were mixed to be 5 mol% and 0.25 mol% of the total composition, respectively.

Comparative Example 2

A positive electrode active material was prepared in the same manner as in Example 3, except that, before secondary sintering, instead of mixing the lithium composite oxide, LiOH and $H_3BO_3$, a lithium composite oxide and LiOH were mixed. Also, before secondary sintering, LiOH was mixed to be 5 mol% of the total composition.

Example 4

A nickel composite precursor of $Ni_{0.92}Co_{0.08}(OH)_2$ was prepared using a precursor aqueous solution in which nickel sulfate and cobalt sulfate were mixed in a molar ratio of 92.0:8.0.

After mixing the nickel composite precursor, LiOH (Li/metal ratio = 1.04) and 1.4 mol% $Al(OH)_3$, the temperature was raised to 750 °C at 2 °C per minute while maintaining an $O_2$ atmosphere in a furnace to perform primary sintering for 10 hours, and the resultant was disintegrated, thereby obtaining a lithium composite oxide.

Next, the dried lithium composite oxide, LiOH, $Co_3O_4$ and $H_3BO_3$ were mixed, and then heated to 720 °C at 4 °C per minute while maintaining an $O_2$ atmosphere in a furnace to perform secondary sintering for 10 hours, and the resultant was cooled naturally, thereby obtaining a positive electrode active material as a final product.

Before secondary sintering, LiOH, $Co_3O_4$ and $H_3BO_3$ were mixed to be 4 mol%, 3 mol%, and 0.25 mol% of the total composition, respectively.

Comparative Example 3

A positive electrode active material was prepared in the same manner as in Example 4, except that, before secondary sintering, instead of mixing the lithium composite oxide, LiOH, $Co_3O_4$ and $H_3BO_3$, a lithium composite oxide, LiOH and $H_3BO_3$ were mixed.

Comparative Example 4

A positive electrode active material was prepared in the same manner as in Example 4, except that, before secondary sintering, instead of mixing the lithium composite oxide, LiOH, $Co_3O_4$ and $H_3BO_3$, a lithium composite oxide, LiOH and $Co_3O_4$ were mixed.

Example 5

A nickel composite precursor of $Ni_{0.92}Co_{0.08}(OH)_2$ was prepared using a precursor aqueous solution in which nickel sulfate and cobalt sulfate were mixed in a molar ratio of 92.0:8.0.

After mixing the nickel composite precursor, LiOH (Li/metal ratio = 1.04) and 1.4 mol% $Al(OH)_3$, the temperature was raised to 750 °C at 2 °C per minute while maintaining an $O_2$ atmosphere in a furnace to perform primary sintering for 10 hours, and the resultant was disintegrated, thereby obtaining a lithium composite oxide.

Next, the dried lithium composite oxide, $Co_3O_4$ and $H_3BO_3$ were mixed, and then heated to 720 °C at 4 °C per minute while maintaining an $O_2$ atmosphere in a furnace to perform secondary sintering for 10 hours, and the resultant was cooled naturally, thereby obtaining a positive electrode active material as a final product.

Before secondary sintering, $Co_3O_4$ and $H_3BO_3$ were mixed to be 3 mol%, and 0.25 mol% of the total composition, respectively.

Comparative Example 5

A positive electrode active material was prepared in the same manner as in Example 5, except that, before secondary sintering, instead of mixing the lithium composite oxide, $Co_3O_4$ and $H_3BO_3$, a lithium composite oxide and $H_3BO_3$ were mixed.

Comparative Example 6

A positive electrode active material was prepared in the same manner as in Example 5, except that, before secondary sintering, instead of mixing the lithium composite oxide, $Co_3O_4$ and $H_3BO_3$, a lithium composite oxide and $Co_3O_4$ were mixed.

Preparation Example 2. Manufacture of lithium secondary battery

A positive electrode slurry was prepared by dispersing 94 wt% of each of the positive electrode active materials prepared according to Preparation Example 1, 3 wt% of artificial graphite and 3 wt% of a PVDF binder in 3.5 g of N-methyl-2-pyrrolidone (NMP). The positive electrode slurry was applied to an aluminum (Al) thin film having a thickness of 20 $\mu$m as a positive electrode current collector and dried, and then subjected to roll pressing, thereby manufacturing a positive electrode. The positive electrode had a loading level of 7 mg/cm², and an electrode density of 3.2 g/cm³.

A coin battery was manufactured using a lithium foil as a counter electrode for the positive electrode, a porous polyethylene film (Celgard 2300, thickness: 25 $\mu$m) as a separator, and an electrolyte solution in which $LiPF_6$ was present at a concentration of 1.15M in a solvent in which ethylene carbonate and ethyl methyl carbonate are mixed in a volume ratio of 3:7.

Experimental Example 1. Structural analysis of positive electrode active material

(1) Cross-sectional SEM analysis of positive electrode active material

SEM images for a lithium composite oxide included in the positive electrode active materials prepared according to Preparation Example 1 were obtained using FE-SEM equipment.

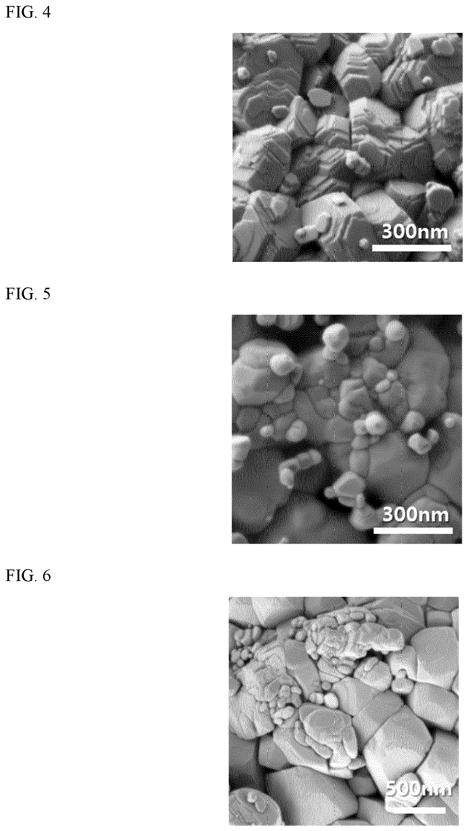

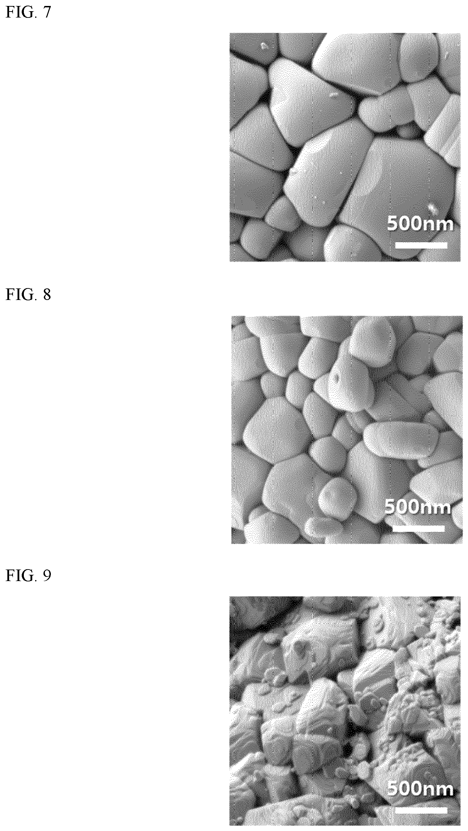

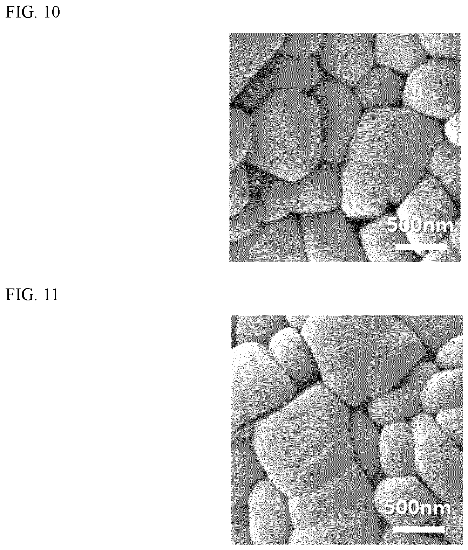

FIGS. 2 and 3 are SEM images of the surface parts of lithium composite oxides included in positive electrode active materials according to Example 1 and Comparative Example 1, respectively, FIGS. 4 and 5 are SEM images of the surface parts of lithium composite oxides included in positive electrode active materials according to Example 3 and Comparative Example 2, respectively, FIGS. 6 to 8 are SEM images of the surface parts of lithium composite oxides included in positive electrode active materials according to Example 4 and Comparative Examples 3 and 4, respectively, and FIGS. 9 to 11 are SEM images of the surface parts of lithium composite oxides included in positive electrode active materials according to Example 5 and Comparative Examples 5 and 6, respectively.

Overall, it can be confirmed that the step structure is introduced to the surface part of the lithium composite oxide included in each of the positive electrode active materials according to Examples 1 to 5. In addition, it can be confirmed that the step structure introduced to the surface part of the lithium composite oxide is not simply due to the curvature formed by the primary particles present on the surface part of a secondary particle.

The step structure introduced to the surface part of the lithium composite oxide included in each of the positive electrode active materials according to Examples 1 to 5 can be seen as a terrace-step structure, and a terrace-step-kink structure in which a kink is partially formed can be confirmed.

Meanwhile, it can be confirmed that there is almost no step structure on the surface part of the lithium composite oxide included in each of the positive electrode active materials according to Comparative Examples 1 to 6.

(2) TEM analysis of positive electrode active material

A TEM image for a lithium composite oxide included in the positive electrode active material according to Example 1 in Preparation Example 1 was obtained, and the directionality of a lithium ion diffusion path formed in the lithium composite oxide was then confirmed from the TEM image.

In addition, by indexing a diffraction pattern obtained by the fast Fourier transform (FFT) of an HR-TEM image, the crystal plane of the lithium composite oxide to which the lithium ion diffusion path formed in the lithium composite oxide is directed was confirmed.

FIG. 12 is a TEM image of the surface part of a lithium composite oxide included in the positive electrode active material according to Example 1, showing each crystal plane forming the surface part of the lithium composite oxide.

Referring to FIG. 12, it can be confirmed that the step structure formed on the surface part of the lithium composite oxide included in the positive electrode active material according to Example 1 is a step structure in which specific crystal planes belonging to {01x}, {02y} and {03z} plane groups have a dihedral angle of 90° or more with other adjacent crystal planes.

In addition, when the lithium ion diffusion path in the lithium composite oxide constituting the positive electrode active material is formed in a direction parallel to the extension direction of a (003) crystal plane, and the diffusion and deintercalation of lithium ions from the inside to the outside of the lithium composite oxide are directed to (012), (014) and (022) crystal planes are relatively free, an improvement in electrochemical properties of the positive electrode active material containing the lithium composite oxide may be expected.

(3) Analysis of surface coating layer

The composition of the surface part of the lithium composite oxide was analyzed through XPS analysis of the positive electrode active material according to Example 1. The XPS analysis was performed using Quantum 2000 (Physical Electronics. Inc) (Acceleration voltage: 0.5 to 15 keV, 300W, Energy resolution: approximately 1.0eV, Minimum analysis area: 10 microns, Sputter rate: 0.1 nm/min).

FIG. 13 is a graph showing the XPS depth profile of the lithium composite oxide included in the positive electrode active material according to Example 1, and referring to FIG. 13, it can be confirmed that boron (B) is detected only on the outermost surface part of the lithium composite oxide (secondary particle).

Referring to FIG. 14, which is a graph showing the B1s XPS spectrum for the region in which boron (B) is detected in the XPS depth profile of FIG. 13, it can be confirmed that the B1s peak specific to lithium borate was detected in the region of approximately 191.4 eV.

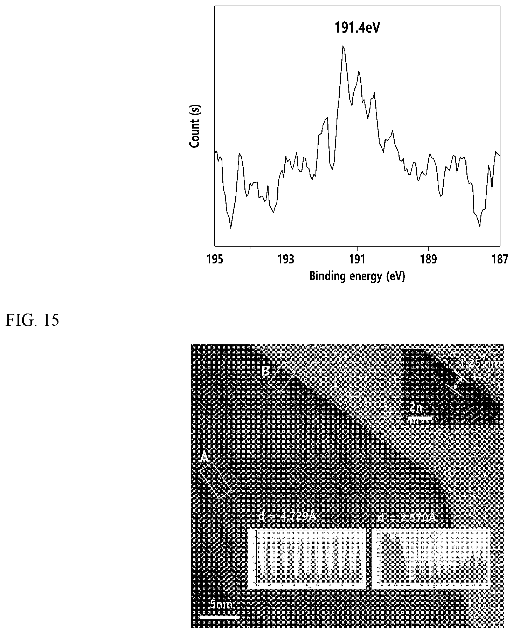

In addition, referring to FIG. 15 showing the interplanar distances between crystal planes in regions A and B in the TEM image of the lithium composite oxide included in the positive electrode active material according to Example 1, in the region A, 4.729Å corresponding to the interplanar distance between the (003) crystal planes of a general NCA or NCM-type lithium composite oxide was measured.

On the other hand, in the region B corresponding to the outermost surface of the lithium composite oxide, an interplanar distance was approximately 2.570Å, different from the region A (that is, the interplanar distance between the (003) crystal planes).

From the results of FIGS. 13 and 14, it can be confirmed that any B-containing oxide is present on the outermost surface of the lithium composite oxide. Here, since compounds having an interplanar distance between crystal planes of approximately 2.570Å are $LiBO_2$, $Li_3BO_5$ and $Li_2B_4O_7$ among the B-containing oxides, it can be expected that $LiBO_2$, $Li_3BO_5$ and/or $Li_2B_4O_7$ are/is present on the outermost surface of the lithium composite oxide.

Meanwhile, as a result of the same experiment for the positive electrode active materials according to Examples 2 to 5, it can be confirmed that a coating layer containing lithium borate was formed on the outermost surface of a lithium composite oxide included in the positive electrode active material.

Experimental Example 2. Evaluation of electrochemical properties of lithium secondary battery

Charge and discharge capacities, and charge/discharge efficiency were measured through charge/discharge experiments performed on the lithium secondary battery (coin cell) manufactured in Preparation Example 2 using an electrochemical analyzer (Toyo, Toscat-3100) at 25 °C in a voltage range of 3.0V to 4.3V with a discharging rate of 0.1C to 5.0C.

In addition, 50 cycles of charging/discharging were performed on the same lithium secondary battery at 25 °C, within a driving voltage range of 3.0V to 4.4V under a 1C/1C condition, and the ratio of the discharge capacity at the 50th cycle to the initial capacity (cycle capacity retention) was measured.

The measurement results are shown in Table 1 below.

Table 1

| Classification | Charge capacity (mAh/g) | Discharge capacity (mAh/g) | Charge/discharge efficiency (%) | Retention@50cy (%) |
|---|---|---|---|---|
| Example 1 | 246.7 | 215.0 | 87.2 | 87.2 |
| Example 2 | 246.7 | 214.6 | 87.0 | 88.8 |
| Example 3 | 241.8 | 223.1 | 92.3 | 93.2 |
| Example 4 | 231.5 | 206.6 | 89.2 | 83.7 |
| Example 5 | 231.0 | 205.1 | 88.8 | 83.3 |
| Comparative Example 1 | 247.7 | 216.0 | 87.2 | 85.1 |
| Comparative Example 2 | 239.4 | 216.9 | 90.6 | 89.8 |

(continued)

| Classification | Charge capacity (mAh/g) | Discharge capacity (mAh/g) | Charge/discharge efficiency (%) | Retention@50cy (%) |
|---|---|---|---|---|
| Comparative Example 3 | 236.8 | 207.5 | 87.6 | 74.3 |
| Comparative Example 4 | 231.2 | 204.6 | 88.5 | 82.3 |
| Comparative Example 5 | 236.7 | 206.3 | 87.2 | 78.2 |
| Comparative Example 6 | 230.8 | 204.7 | 88.7 | 81.4 |

Referring to the results in Table 1, which include the results of Examples and Comparative Examples corresponding to each other, it can be confirmed that the charge/discharge efficiencies and cycle capacity retention rates of Examples using a positive electrode active material including a lithium composite oxide having a step structure on the surface part is generally higher than those of Comparative Examples.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.


**Claims**

1.  A positive electrode active material comprising a lithium composite oxide enabling lithium intercalation and deintercalation,
    wherein the lithium composite oxide has a surface part with a step structure.

2.  The positive electrode active material of claim 1, wherein the lithium composite oxide comprises at least nickel and cobalt.

3.  The positive electrode active material of claim 2, wherein the lithium composite oxide further comprises at least one selected from manganese and aluminum.

4.  The positive electrode active material of claim 1, wherein the step structure formed on the surface part of the lithium composite oxide is formed to intersect the extension direction of a (003) crystal plane for the lithium composite oxide.

5.  The positive electrode active material of claim 1, wherein the step structure formed on the surface part of the lithium composite oxide is formed such that one crystal plane belonging to at least one plane group selected from {01x}, {02y} and {03z} plane groups among the crystal planes present on the surface part of the lithium composite oxide has a predetermined dihedral angle with another adjacent crystal plane (wherein x, y and z are each independently an integer of 0 to 12).

6.  The positive electrode active material of claim 5, wherein the dihedral angle of one crystal plane, which belongs to at least one plane group selected from the {01x}, {02y} and {03z} plane groups, with another adjacent crystal plane is 90° or more.

7.  The positive electrode active material of claim 5, wherein a structure formed such that one crystal plane belonging to at least one plane group selected from the {01x}, {02y} and {03z} plane groups among crystal planes present on the surface part of the lithium composite oxide has a predetermined dihedral angle with another adjacent crystal plane is periodically repeated on the surface part of the lithium composite oxide.

8.  The positive electrode active material of claim 1, wherein the step structure is a terrace-step-kink structure.

9.  The positive electrode active material of claim 1, wherein the lithium composite oxide is represented by Formula 1 below,

[Formula 1] $\quad Li_w Ni_{1-(x+y+z)} Co_x M1_y M2_z O_2$

(Here, M1 is at least one selected from Mn and Al,

M2 is at least one selected from Mn, Ba, Ce, Hf, Ta, Cr, F, Mg, Al, Cr, V, Ti, Fe, Zr, Zn, Si, Y, Nb, Ga, Sn, Mo, W, P, Sr, Ge, Nd, Gd, B and Cu,
M1 and M2 are different elements,
$0.5 \leq w \leq 1.5$, $0 \leq x \leq 0.50$, $0 < y \leq 0.20$, and $0 \leq z \leq 0.20$).

10. The positive electrode active material of claim 1, wherein the positive electrode active material comprises a secondary particle formed by aggregating a plurality of lithium composite oxides, which are primary particles, and

a coating layer comprising an oxide represented by Formula 2 is formed on at least a part of the surfaces of the primary particles and the secondary particles,

[Formula 2] $\quad Li_a M3_b O_c$

(Here, M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd and Nd,
$0 \leq a \leq 8$, $0 < b \leq 8$, and $2 \leq c \leq 13$).

11. The positive electrode active material of claim 10, wherein the oxide comprises a boron-containing oxide represented by Formula 3 below,

[Formula 3] $\quad Li_d B_e O_f$

(Here, $0 \leq d \leq 8$, $0 < e \leq 8$, and $2 \leq f \leq 13$).

12. A positive electrode, comprising:

a positive electrode current collector; and
a positive electrode active material layer which is formed on the positive electrode current collector, and comprises the positive electrode active material according to any one of claims 1 to 11.

13. A lithium secondary battery using the positive electrode of claim 12.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/KR2021/007333** |

| A. | CLASSIFICATION OF SUBJECT MATTER |
| --- | --- |

**H01M 4/36**(2006.01)i; **H01M 4/62**(2006.01)i; **H01M 4/525**(2010.01)i; **H01M 4/505**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01G 53/00(2006.01); H01M 10/052(2010.01); H01M 10/0525(2010.01); H01M 4/131(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 계단형 구조(step structure), 테라스-스텝 구조(terrace-step structure), 표면(surface), 리튬 복합 산화물(lithium complex oxide), H3BO3, LiOH, 양극 활물질(positive active material)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2020-0119332 A1 (TODA KOGYO CORP.) 16 April 2020 (2020-04-16)<br>See paragraphs [0016], [0039] and [0060]; and figure 2B. | 1-13 |
| A | KR 10-2019-0078498 A (POSCO et al.) 04 July 2019 (2019-07-04)<br>See entire document. | 1-13 |
| A | KR 10-2018-0077090 A (LG CHEM, LTD.) 06 July 2018 (2018-07-06)<br>See entire document. | 1-13 |
| A | JP 2019-106379 A (NICHIA CHEM IND LTD.) 27 June 2019 (2019-06-27)<br>See entire document. | 1-13 |
| A | LEE, Seung-Hwan et al. Superior performances of B-doped LiNi0.84Co0.10Mn0.06O2 cathode for advanced LIBs. Scientific Reports. 26 November 2019(online publication date), vol. 9, no. 1, article no. 17541, inner pp. 1-7.<br>See entire document. | 1-13 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 September 2021** | **24 September 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/007333**

| Patent document cited in search report | | | Publication date (day/month/year) | Patent family member(s) | | | Publication date (day/month/year) |
|---|---|---|---|---|---|---|---|
| US | 2020-0119332 | A1 | 16 April 2020 | CA | 2967917 | A1 | 26 May 2016 |
| | | | | CN | 107004849 | A | 01 August 2017 |
| | | | | CN | 107004849 | B | 26 February 2021 |
| | | | | EP | 3223346 | A1 | 27 September 2017 |
| | | | | JP | 2016-100174 | A | 30 May 2016 |
| | | | | JP | 6417888 | B2 | 07 November 2018 |
| | | | | KR | 10-2017-0084230 | A | 19 July 2017 |
| | | | | TW | 201626624 | A | 16 July 2016 |
| | | | | US | 10547047 | B2 | 28 January 2020 |
| | | | | US | 2018-0183039 | A1 | 28 June 2018 |
| | | | | WO | 2016-080517 | A1 | 26 May 2016 |
| KR | 10-2019-0078498 | A | 04 July 2019 | CN | 111771303 | A | 13 October 2020 |
| | | | | EP | 3734720 | A1 | 04 November 2020 |
| | | | | JP | 2021-509220 | A | 18 March 2021 |
| | | | | KR | 10-2177049 | B1 | 10 November 2020 |
| | | | | WO | 2019-132332 | A1 | 04 July 2019 |
| KR | 10-2018-0077090 | A | 06 July 2018 | None | | | |
| JP | 2019-106379 | A | 27 June 2019 | JP | 2015-133318 | A | 23 July 2015 |
| | | | | JP | 6524651 | B2 | 05 June 2019 |
| | | | | JP | 6743920 | B2 | 19 August 2020 |
| | | | | US | 10490810 | B2 | 26 November 2019 |
| | | | | US | 2015-0171424 | A1 | 18 June 2015 |
| | | | | US | 2017-0373309 | A1 | 28 December 2017 |
| | | | | US | 9793540 | B2 | 17 October 2017 |

Form PCT/ISA/210 (patent family annex) (July 2019)